# FASCICULE DE BREVET EUROPEEN

(11) **EP 2 885 196 B1**
(45) Date de publication et mention de la délivrance du brevet: **17.08.2016**
(21) Numéro de dépôt: 13739754.3
(22) Date de dépôt: 17.06.2013
(51) Int. Cl.: B62D 25/20

(54) **ENSEMBLE DE STRUCTURE DE CAISSE DE VÉHICULE AUTOMOBILE COMPORTANT UN PLANCHER AVANT PLAT**
KAROSSERIESTRUKTURANORDNUNG FÜR EIN KRAFTFAHRZEUG MIT EINEM FLACHEN VORDERBODENBLECH
MOTOR VEHICLE BODYSHELL STRUCTURE ASSEMBLY COMPRISING A FLAT FRONT FLOORPAN

(30) Priorité: 20.08.2012 FR 1257865
(43) Date de publication de la demande: 24.06.2015
(73) Titulaire: Renault S.A.S., 92100 Boulogne-Billancourt (FR)
(72) Inventeur: BANNIER, Nathalie, F-78860 Saint Nom La Breteche (FR); TABUTEAU, Pascal, F-78180 Montigny le Bretonneux (FR); ROUSSEAU, Olivier, F-91160 Ballainvilliers (FR)
(86) Numéro de dépôt international: PCT/FR2013/051416
(87) Numéro de publication internationale: WO 2014/029926

(56) Documents cités:
- WO-A1-2008/084097
- WO-A1-2012/029115
- DE-A1- 1 957 893
- DE-A1-102008 036 336

## Description

L'invention concerne un ensemble de structure de caisse de véhicule automobile.

L'invention concerne plus particulièrement un ensemble de structure de caisse de véhicule automobile comportant un tablier avant, une partie arrière, et un ensemble dit de plancher qui s'étend entre le tablier avant et la partie arrière et qui comporte au moins un élément de tunnel central, qui s'étend sensiblement suivant un axe médian de plancher et deux éléments de demi-plancher qui s'étendent transversalement de part et d'autre de l'élément de tunnel central.

Le document WO 2008/084097 A1 divulgue un ensemble de structure de caisse de véhicule selon le préambule de la revendication 1.

On connaît de nombreux exemples de structure de caisse de ce type.

Conventionnellement, un tel ensemble de structure de caisse comporte un élément de tunnel central qui s'étend suivant toute la longueur de l'ensemble de plancher entre le tablier et la partie arrière. Cet élément de tunnel central est destiné à recevoir différents organes du véhicule, notamment une commande de boîte de vitesses du véhicule, une commande d'un frein à main et des éléments d'une ligne d'échappement du véhicule.

Le développement de nouveaux véhicules à boîtes de vitesses dites "robotisées" permet d'envisager des commandes de boîte de vitesses de type électrique qui peuvent être déportées dans des emplacements de l'habitacle autre que le tunnel central, notamment au tableau de bord.

Par ailleurs, l'ensemble des éléments de la ligne d'échappement qui sont logés dans l'élément de tunnel central n'occupe pas nécessairement toute la longueur de l'ensemble de plancher, soit parce qu'ils sont de nombre réduit, comme c'est le cas pour un véhicule dépourvu de catalyseur ou de filtres à particules, soit parce qu'ils sont disposés en d'autres points du véhicule, notamment dans le compartiment moteur.

De ce fait, la présence d'un élément de tunnel central occupant toute la longueur de l'ensemble de plancher n'est pas nécessaire.

L'invention propose donc un élément de structure de caisse comportant un ensemble de plancher dont une partie avant est sensiblement plate dans sa partie avant, ce qui permet par exemple l'implantation d'un troisième siège en lieu et place du volume conventionnellement occupé par une partie avant de l'élément de tunnel central.

Dans ce but, l'invention propose un élément de structure de caisse du type décrit précédemment, caractérisé en ce qu'il comporte :
- un élément de plancher avant sensiblement plat, qui s'étend suivant toute la largeur de l'ensemble de plancher,
- un élément dit "arrière" de tunnel central, qui s'étend entre une extrémité arrière de l'élément de plancher avant et la partie arrière,
- deux éléments arrière de demi-plancher qui s'étendent transversalement de part et d'autre de l'élément arrière de tunnel central et longitudinalement entre une extrémité arrière de l'élément de plancher avant et la partie arrière.

Selon d'autres caractéristiques de l'invention :
- l'élément de plancher avant forme une première partie monobloc, les deux éléments arrière de demi-plancher et l'élément arrière de tunnel central forment une seconde partie monobloc, et les première et seconde parties monoblocs sont assemblées l'une à l'autre,
- un bord de jonction d'une partie est recouvert par un bord de jonction de l'autre partie et les parties sont soudées par points au travers desdits bords de jonction,
- une traverse avant de support de glissières de sièges est soudée aux première et secondes parties, longitudinalement de part et d'autre du bord de jonction des premières et secondes parties et d'un bord avant de l'élément arrière de tunnel,
- la traverse présente sensiblement la forme d'un profilé transversal de section en forme de "U" inversé, dont une aile arrière transversale comporte un évidement correspondant à la section de l'élément arrière de tunnel et dont une aile avant transversale ferme ledit tunnel,
- l'élément de plancher avant, les deux éléments arrière de demi-plancher, et l'élément arrière de tunnel central forment une partie unique monobloc,
- l'élément arrière de tunnel comporte une partie avant inclinée de jonction avec l'élément de plancher avant,
- une traverse avant de support de glissières de sièges est soudée à la partie unique monobloc sensiblement au milieu de la partie avant inclinée de jonction de l'élément arrière de tunnel,
- la traverse présente sensiblement la forme d'un profilé transversal de section en forme de "U" inversé, dont les ailes avant et une aile arrière transversale comportent des évidements correspondant à la section de la partie de jonction de l'élément arrière de tunnel.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un ensemble de structure de caisse selon un état antérieur de la technique ;
- les figures 2 et 3 sont des vues en perspective d'un ensemble de structure de caisse selon un premier mode de réalisation de l'invention ;
- la figure 4 est une vue en perspective d'un ensemble de structure de caisse selon un second mode de réalisation de l'invention ;
- la figure 5 est une vue en perspective et en coupe d'un ensemble de structure de caisse selon le second mode de réalisation de l'invention.

Sur les figures, des chiffres de référence identiques désignent des éléments identiques ou ayant des fonctions similaires.

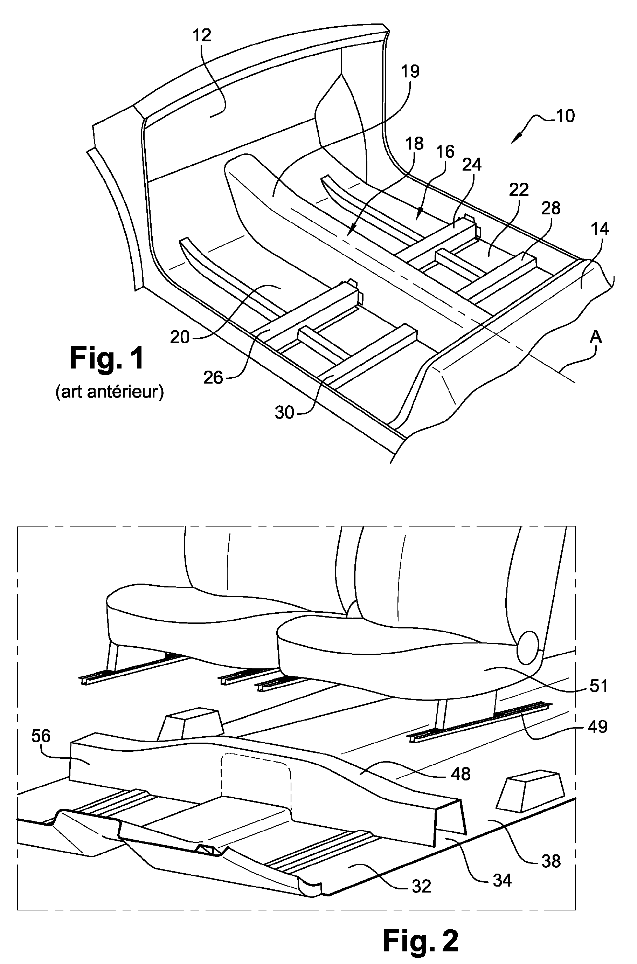

On a représenté à la figure 1 un ensemble 10 de structure de caisse de véhicule automobile réalisé de manière conforme à l'état de la technique.

De manière connue, l'ensemble 10 comporte un tablier avant 12, une partie arrière 14, destinée par exemple à recevoir un réservoir du véhicule et/ou un train arrière dudit véhicule, et un ensemble dit "de plancher" 16 qui s'étend entre le tablier avant 12 et la partie arrière 14.

De manière connue, l'ensemble dit "de plancher" 16 comporte au moins un élément de tunnel central 18 qui s'étend sensiblement suivant un axe médian "A" du plancher et deux éléments de demi-planchers 20 et 22 qui s'étendent transversalement de part et d'autre de l'élément 18 de tunnel central. Les deux éléments de demi-planchers 20, 22 sont agencés dans un même plan horizontal, tandis que l'élément de tunnel central 18 fait saillie verticalement par rapport aux deux éléments de demi-planchers 20, 22.

Un tel ensemble 16 dit "de plancher" est par exemple destiné à recevoir notamment des traverses permettant la fixation de glissières (non représentées) de siège du véhicule.

Par exemple, à cet effet, comme on peut le voir sur la figure 1, l'ensemble 16 "de plancher" comporte une traverse avant droite 24, une traverse avant gauche 26, une traverse arrière droite 28 et une traverse arrière gauche 30.

L'élément de tunnel central 18 permet le passage de différents organes (non représentés) du véhicule tels qu'un mécanisme de commande d'une boîte de vitesse manuelle du véhicule, un mécanisme de frein à main, et une partie d'une ligne d'échappement du véhicule.

Le développement de nouveaux véhicules comportant notamment des boîtes de vitesses robotisées permet de déporter la commande de boîte dans des emplacements de l'habitacle autres que l'élément de tunnel central 18.

Ainsi, par exemple, au lieu de disposer d'une commande de boîte de vitesses dite "au plancher" qui est nécessairement implantée dans une partie avant 19 du tunnel central 18, il est possible de disposer d'une commande de boîte de vitesses qui est agencée par exemple au tableau de bord (non représenté) du véhicule.

De même, les différents éléments de la ligne d'échappement du véhicule, tels que filtre à particules, catalyseur, silencieux n'occupent pas nécessairement toute la longueur du tunnel central 18.

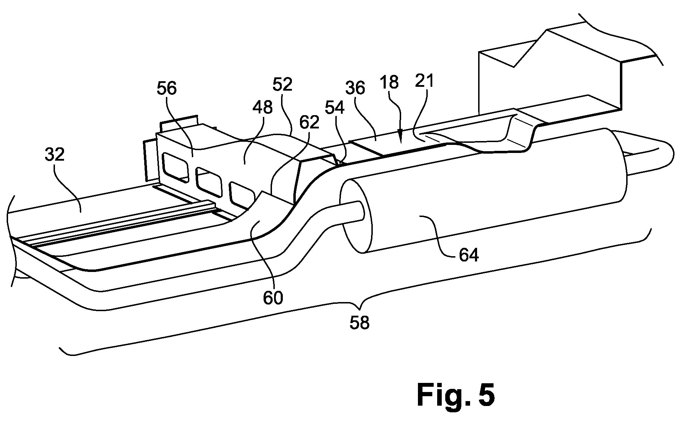

De ce fait, il est possible d'envisager un tunnel central 18 raccourci, tel que représenté à la figure 5, dont l'ensemble de plancher est sensiblement plat dans sa partie avant, ce qui permet par exemple l'implantation d'un troisième siège en lieu et place de la partie avant 19 du tunnel 18, ou une banquette s'étendant suivant toute la largeur du véhicule et comportant une telle troisième place.

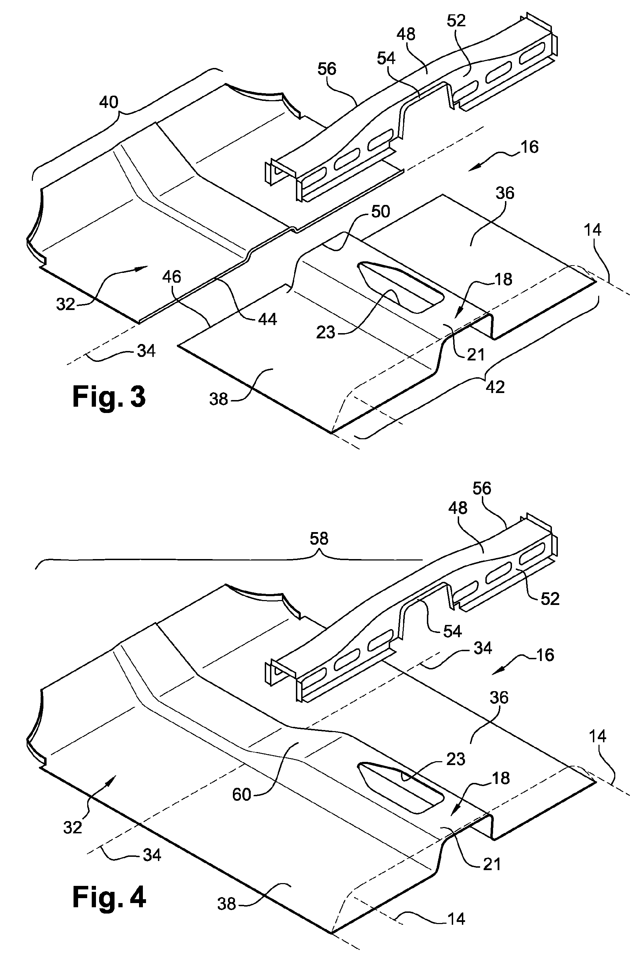

Dans ce but, l'invention propose un ensemble 10 de structure de caisse du type décrit précédemment caractérisé en ce qu'il comporte, comme l'illustre les figures 3 et 4 :
- un élément 32 de plancher avant sensiblement plat qui s'étend suivant toute la largeur de l'ensemble de plancher 16,
- un élément dit arrière 21 de tunnel central, qui s'étend entre l'extrémité arrière 34 de l'élément 32 de plancher avant et la partie arrière 14,
- deux éléments arrières de demi-planchers droit 36 et gauche 38 qui s'étendent suivant la direction transversale de part et d'autre de l'élément arrière 21 de tunnel central et suivant la direction longitudinale entre l'extrémité arrière 34 de l'élément 32 de plancher avant et la partie arrière 14.

L'élément de plancher avant 32 et les deux éléments arrière de demi-planchers 36, 38 s'étendent sensiblement dans un plan horizontal commun, tandis que l'élément arrière 21 de tunnel central s'étend verticalement en saillie par rapport au plan des éléments de plancher 32, 36, 38.

L'élément dit arrière 21 de tunnel central comporte notamment une ouverture 23 apte à permettre le passage d'un mécanisme (non représenté) d'un frein à main du véhicule.

Cette configuration a été représentée aux figures 3 et 4 qui représentent deux variantes possibles de l'invention.

On remarquera que sur la figure 4, l'extrémité arrière 34 de l'élément de plancher avant correspond à une ligne de séparation fictive ou théorique séparant l'élément de plancher avant 32 des éléments arrière de demi-planchers 36 et 38.

Selon un premier mode de réalisation de l'invention qui a été représenté à la figure 3, l'élément de plancher avant 32 forme une première partie monobloc 40 et les deux éléments arrières de demi-planchers 36 et 38, qui sont agencés de part et d'autre de l'élément arrière de tunnel 21, forment avec l'élément arrière de tunnel 21 une seconde partie monobloc 42.

Les première et seconde parties monoblocs 40, 42 sont assemblées l'une à l'autre.

De préférence, un bord de jonction 44 d'une 40 des parties monoblocs est apte à être recouvert par un bord de jonction 46 de l'autre 42 partie monobloc, et les parties sont soudées l'une à l'autre au niveau de ses bords.

Ainsi, comme l'illustre la figure 3, la première partie monobloc 40 comporte un bord de jonction 44, qui correspond sensiblement à l'extrémité arrière 34 de l'élément de plancher, qui est apte à être recouvert par un bord de jonction 46 agencé à l'extrémité avant de la seconde partie monobloc 42.

Une soudure par points est alors effectuée à travers les deux bords de jonction 44 et 46.

Avantageusement, pour renforcer cet assemblage, une traverse unique 48 permettant la fixation de glissières de siège (non représentées) est soudée au première et seconde parties 40, 42.

Plus particulièrement, la traverse 48 est fixée longitudinalement de part et d'autre du bord de jonction 44, 46 des première et seconde parties 40, 42 et de part et d'autre d'un bord avant 50 de l'élément arrière de tunnel 21.

A cet effet, la traverse 48 présente sensiblement la forme d'un profilé d'orientation transversale comportant une section en forme de "U" inversé.

Une aile arrière transversale 52 comporte un évidement 54 qui correspond à la section de l'élément arrière 21 de tunnel et comporte d'autre part une aile avant 56 qui ferme ledit tunnel, comme représenté à la figure 2.

Cette configuration permet avantageusement d'assurer la rigidité de l'assemblage des première et seconde partie monobloc 40, 42 tout en obturant l'élément arrière de tunnel 21.

Comme l'illustre la figure 2, la traverse 48 est apte à recevoir des extrémités avant de glissières 49 de sièges 51.

Selon un second mode de réalisation qui a été représenté à la figure 4, l'élément de plancher avant 32, les deux éléments arrières de demi-planchers 36, 38, et l'élément arrière de tunnel 21 forment une partie unique monobloc 58.

Dans cette configuration, l'élément arrière de tunnel 18 comporte une partie avant inclinée 60 réalisant la jonction avec l'élément de plancher avant 32.

Dans cette configuration, comme pour le mode de réalisation précédent, une traverse avant 48 est soudée à la partie unique monobloc 58 sensiblement à la jonction théorique de l'élément de plancher 32 et des éléments de demi-planchers 36, 38, c'est-à-dire au milieu de la partie de jonction 60 de l'élément arrière de tunnel 18.

Ainsi, comme on peut le voir à la figure 5, la traverse 48 présente là aussi la forme d'un profilé transversal de section en forme de "U" inversé dont les ailes avant 56 et arrière 52 comportent des évidements respectifs 62 et 54 qui correspondent à la section de la partie de jonction 60 de l'élément arrière de tunnel 18.

Avantageusement, dans cette configuration, la traverse 48 permet la rigidification de l'ensemble de la partie unique monobloc 58.

Comme on peut le voir, l'invention permet donc avantageusement de proposer un ensemble de plancher comportant un élément de plancher avant 32 sensiblement plan, ce qui permet de libérer un espace supplémentaire permettant par exemple de disposer d'une troisième place frontale à l'avant du véhicule.

Par ailleurs, la présence d'un élément 21 arrière de tunnel central permet, comme on peut le constater à la figure 5, d'abriter certains organes du véhicule automobile. Ainsi, on peut observer que l'élément 18 arrière de tunnel central est apte à abriter un élément 64 d'une ligne d'échappement du véhicule.

## Revendications

1. Ensemble (10) de structure de caisse de véhicule automobile, comportant un tablier avant (12), une partie arrière (14), et un ensemble dit de plancher (16) qui s'étend entre le tablier avant (12) et la partie arrière (14) et qui comporte au moins un élément (18, 21) de tunnel central, qui s'étend sensiblement suivant un axe médian de plancher et deux éléments de demi-plancher qui s'étendent transversalement de part et d'autre de l'élément de tunnel central,
**caractérisé en ce qu'**il comporte :
- un élément (32) de plancher avant sensiblement plat, qui s'étend suivant toute la largeur de l'ensemble de plancher,
- un élément (21) dit "arrière" de tunnel central, qui s'étend entre une extrémité arrière (34) de l'élément (32) de plancher avant et la partie arrière (14),
- deux éléments arrière (36, 38) de demi-plancher qui s'étendent transversalement de part et d'autre de l'élément arrière (21) de tunnel central et longitudinalement entre une extrémité arrière (34) de l'élément de plancher avant et la partie arrière (14).

2. Ensemble (10) de structure de caisse selon la revendication précédente, **caractérisé en ce que** l'élément (32) de plancher avant forme une première partie (40) monobloc, **en ce que** les deux éléments arrière (36, 38) de demi-plancher et l'élément arrière (21) de tunnel central forment une seconde partie (42) monobloc, et ce que les première et seconde parties monoblocs (40, 42) sont assemblées l'une à l'autre.

3. Ensemble (10) de structure de caisse selon la revendication précédente, **caractérisé en ce qu'**un bord de jonction (44) d'une partie (40) est recouvert par un bord de jonction (46) de l'autre partie (42) **et en ce que** les parties (40, 42) sont soudées par points au travers des desdits bords (42, 44) de jonction.

4. Ensemble (10) de structure de caisse selon la revendication précédente, **caractérisé en ce qu'**une traverse avant (48) de support de glissières (49) **de** sièges (51) est soudée aux première et secondes parties (40, 42), longitudinalement de part et d'autre du bord de jonction (44, 46) des premières et secondes parties (40, 42) et d'un bord avant (50) de l'élément arrière (21) de tunnel.

5. Ensemble (10) de structure de caisse selon la revendication précédente, **caractérisé en ce que** la traverse (48) présente sensiblement la forme d'un profilé transversal de section en forme de U inversé, dont une aile arrière transversale (52) comporte un évidement (54) correspondant à la section de l'élément arrière (21) de tunnel et dont une aile avant (56) transversale ferme ledit tunnel (21).

6. Ensemble (10) de structure de caisse selon la revendication 1, **caractérisé en ce que** l'élément de plancher (32) avant, les deux éléments arrière (36, 38) de demi-plancher, et l'élément arrière (21) de tunnel central forment une partie unique monobloc (58).

7. Ensemble (10) de structure de caisse selon la revendication précédente, **caractérisé en ce que** l'élément arrière (21) de tunnel comporte une partie avant (60) inclinée de jonction avec l'élément de plancher avant (32).

8. Ensemble (10) de structure de caisse selon la revendication précédente, **caractérisé en ce qu**'une traverse avant (48) de support de glissières de sièges est soudée à la partie unique monobloc (58) sensiblement au milieu de la partie avant (60) inclinée de jonction de l'élément arrière (21) de tunnel.

9. Ensemble (10) de structure de caisse selon la revendication précédente, **caractérisé en ce que** la traverse (48) présente sensiblement la forme d'un profilé transversal de section en forme de U inversé, dont une aile avant (56) et une aile arrière (52) transversale comportent des évidements (62, 54) correspondant à la section de la partie (60) de jonction de l'élément arrière (21) de tunnel.

## Patentansprüche

1. Anordnung (10) einer Karosseriestruktur für ein Kraftfahrzeug, umfassend eine Bugschürze (12), einen hinteren Teil (14) und eine sogenannte Bodenanordnung (16), die sich zwischen der Bugschürze (12) und dem hinteren Teil (14) erstreckt und die mindestens ein Mitteltunnelelement (18, 21), das sich im Wesentlichen entlang einer Mittelachse des Bodens erstreckt, und zwei Halbboden-Elemente aufweist, die sich auf beiden Seiten des Mitteltunnelelements in Querrichtung erstrecken,
**dadurch gekennzeichnet, dass** sie Folgendes aufweist:
- ein im Wesentlichen flaches Vorderbodenelement (32), das sich entlang der gesamten Breite der Bodenanordnung erstreckt,
- ein sogenanntes "hinteres" Mitteltunnelelement (21), das sich zwischen einem hinteren Ende (34) des Vorderbodenelements (32) und dem hinteren Teil (14) erstreckt,
- zwei hintere Halbboden-Elemente (36, 38), die sich auf beiden Seiten des hinteren Mitteltunnelelements (21) in Querrichtung und in Längsrichtung zwischen einem hinteren Ende (34) des Vorderbodenelements und dem hinteren Teil (14) erstrecken.

2. Anordnung (10) einer Karosseriestruktur nach dem vorhergehenden Anspruch, **dadurch gekennzeichnet, dass** das Vorderbodenelement (32) einen ersten Teil (40) aus einem Stück bildet, dass die zwei hinteren Halbboden-Elemente (36, 38) und das hintere Mitteltunnelelement (21) einen zweiten Teil (42) aus einem Stück bilden, und dass der erste und zweite Teil aus einem Stück (40, 42) miteinander verbunden sind.

3. Anordnung (10) einer Karosseriestruktur nach dem vorhergehenden Anspruch, **dadurch gekennzeichnet, dass** ein Verbindungsrand (44) eines Teils (40) durch einen Verbindungsrand (46) des anderen Teils (42) bedeckt ist und dass die Teile (40, 42) durch die Verbindungsränder (42, 44) punktverschweißt sind.

4. Anordnung (10) einer Karosseriestruktur nach dem vorhergehenden Anspruch, **dadurch gekennzeichnet, dass** eine vordere Tragstrebe (48) von Schienen (49) von Sitzen (51) an den ersten und zweiten Teil (40, 42) in Längsrichtung auf beiden Seiten des Verbindungsrandes (44, 46) des ersten und zweiten Teils (40, 42) und eines Vorderrandes (50) des hinteren Tunnelelements (21) angeschweißt ist.

5. Anordnung (10) einer Karosseriestruktur nach dem vorhergehenden Anspruch, **dadurch gekennzeichnet, dass** die Strebe (48) im Wesentlichen die Form eines Querprofils mit einem Querschnitt in Form eines umgekehrten U aufweist, wovon ein hinterer Querflügel (52) eine Ausnehmung (54) aufweist, die dem Querschnitt des hinteren Tunnelelements (21) entspricht, und wovon ein vorderer Querflügel (56) den Tunnel (21) schließt.

6. Anordnung (10) einer Karosseriestruktur nach dem Anspruch 1, **dadurch gekennzeichnet, dass** das Vorderbodenelement (32), die zwei hinteren Halbboden-Elemente (36, 38) und das hintere Mitteltunnelelement (21) ein einziges Teil aus einem Stück (58) bilden.

7. Anordnung (10) einer Karosseriestruktur nach dem vorhergehenden Anspruch, **dadurch gekennzeichnet, dass** das hintere Tunnelelement (21) ein geneigtes Vorderteil (60) zum Verbinden mit dem Vorderbodenelement (32) aufweist.

8. Anordnung (10) einer Karosseriestruktur nach dem vorhergehenden Anspruch, **dadurch gekennzeichnet, dass** eine vordere Tragstrebe (48) von Schienen von Sitzen an das einzige Teil aus einem Stück (58) im Wesentlichen in der Mitte des geneigten Vorderteils (60) zum Verbinden des hinteren Tunnelelements (21) angeschweißt ist.

9. Anordnung (10) einer Karosseriestruktur nach dem vorhergehenden Anspruch, **dadurch gekennzeichnet, dass** die Strebe (48) im Wesentlichen die Form eines Querprofils mit einem Querschnitt in Form eines umgekehrten U aufweist, wovon ein vorderer Querflügel (56) und ein hinterer Querflügel (52) Ausnehmungen (62, 54) aufweisen, die dem Querschnitt des Teils (60) zum Verbinden des hinteren Tunnelelements (21) entsprechen.

## Claims

1. Motor vehicle bodyshell structure assembly (10), comprising a front bulkhead (12), a rear part (14), and an assembly referred to as a floorpan assembly (16) which extends between the front bulkhead (12) and the rear part (14) and which comprises at least one central tunnel element (18, 21) that extends substantially along a median floorpan axis and two half-floorpan elements that extend transversely on either side of the central tunnel element,
**characterized in that** it comprises:
- a substantially flat front floorpan element (32) which extends across the entire width of the floorpan assembly,
- a central tunnel element (21) referred to as the "rear" central tunnel element, which extends between a rear end (34) of the front floorpan element (32) and the rear part (14),
- two rear half-floorpan elements (36, 38) which extend transversely on either side of the rear central tunnel element (21) and longitudinally between a rear end (34) of the front floorpan element and the rear part (14).

2. Bodyshell structure assembly (10) according to the preceding claim, **characterized in that** the front floorpan element (32) forms a first one-piece part (40), **in that** the two rear half-floorpan elements (36, 38) and the rear central tunnel element (21) form a second one-piece part (42), and **in that** the first and second one-piece parts (40, 42) are fitted together.

3. Bodyshell structure assembly (10) according to the preceding claim, **characterized in that** a joining edge (44) of one part (40) is covered by a joining edge (46) of the other part (42), and **in that** the parts (40, 42) are spot-welded through said joining edges (42, 44).

4. Bodyshell structure assembly (10) according to the preceding claim, **characterized in that** a front crossmember (48) for supporting tracks (49) for seats (51) is welded to the first and second parts (40, 42), longitudinally on either side of the joining edge (44, 46) of the first and second parts (40, 42) and of a front edge (50) of the rear tunnel element (21).

5. Bodyshell structure assembly (10) according to the preceding claim, **characterized in that** the crossmember (48) has substantially the form of a transverse profiled element with a section in the form of an inverted U, a transverse rear flange (52) of which comprises a cutout (54) corresponding to the section of the rear tunnel element (21) and a transverse front flange (56) of which closes said tunnel (21).

6. Bodyshell structure assembly (10) according to Claim 1, **characterized in that** the front floorpan element (32), the two rear half-floorpan elements (36, 38), and the rear central tunnel element (21) form a single one-piece part (58).

7. Bodyshell structure assembly (10) according to the preceding claim, **characterized in that** the rear tunnel element (21) comprises an inclined front part (60) for joining to the front floorpan element (32).

8. Bodyshell structure assembly (10) according to the preceding claim, **characterized in that** a front crossmember (48) for supporting tracks for seats is welded to the single one-piece part (58) substantially in the middle of the inclined front joining part (60) of the rear tunnel element (21).

9. Bodyshell structure assembly (10) according to the preceding claim, **characterized in that** the crossmember (48) has substantially the form of a transverse profiled element with a section in the form of an inverted U, a transverse front flange (56) and a transverse rear flange (52) of which comprise cutouts (62, 54) corresponding to the section of the joining part (60) of the rear tunnel element (21).
